# EUROPEAN PATENT SPECIFICATION

(11) **EP 2 365 563 B1**
(45) Date of publication and mention of the grant of the patent: **15.07.2015**
(21) Application number: 11167261.4
(22) Date of filing: 25.07.2007
(51) Int. Cl.: H01M 2/22, H01M 4/136, H01M 4/38, H01M 4/58, H01M 6/10, H01M 6/16, H01M 4/04, H01M 10/0587

(54) **Lithium-iron disulfide cylindrical cell with modified positive electrode**
Zylindrische Lithium-Eisen-Disulfid-Zelle mit modifizierter positiver Elektrode
Pile cylindrique de type Lithium-disulfure de fer avec électrode positive modifiée

(30) Priority: 26.07.2006 US 493314; 17.10.2006 US 581992
(43) Date of publication of application: 14.09.2011
(62) Divisional of application: 07836247.2
(73) Proprietor: EVEREADY BATTERY COMPANY, INC., St. Louis, MO 63141 (US)
(72) Inventor: Marple, Jack W., Avon, OH 44011 (US); Kaplin, David A., Mayfield Heights, OH 44124 (US)
(74) Representative: Von Kreisler Selting Werner - Partnerschaft von Patentanwälten und Rechtsanwälten mbB

(56) References cited:
- WO-A-03/105255
- US-A- 4 565 752
- US-A1- 2005 112 467
- US-A1- 2006 035 147

## Description

### FIELD OF THE INVENTION AND RELATED APPLICATION

The present invention relates to an electrochemical cell particularly an electrochemical cell having lithium and iron disulfide as its primary electrochemically active materials and a positive electrode with electrochemically active material selectively deposited thereon for improved service and more efficient utilization of the electrochemically active material of the negative electrode.

### BACKGROUND OF THE INVENTION

Electrochemical cells incorporating a lithium positive anode have become favored, among other things, because of their light weight, high voltage, high electrochemical equivalence and good conductivity. Such lithium cells can be generically divided into two categories: primary cells, such as lithium-iron disulfide, lithium-thionyl chloride and lithium-manganese dioxide systems, and secondary cells which allow for recharging of such secondary cells, such as lithium-ion, Li-PEO-LiClO₄/VO₄ and the like.

In comparison to primary lithium systems, secondary lithium cells have very specific constraints from a cell design and chemistry point of view. Many secondary cells require intercalating lithium, meaning that lithium must be provided in an excess due to the stripping and replating of lithium that occurs during charge-discharge cycles. Also, such porous, high surface area intercalating lithium compounds are highly reactive and readily form short-circuiting dendrites, thereby presenting significant safety concerns.

Other secondary cells typically use materials, including but not limited to polymer, inorganic or solid-state electrolytes, that are vastly different from and usually much more expensive than those found in primary lithium cells. Also, issues inherent to secondary cells such as control of heat, optimizing inputs for the purpose of improving charge-discharge cycling and secondary systems' affinity to self-discharge tend to result in significantly higher costs and complexities for secondary cell designs. Lastly, secondary cells may have unusual form factors (e.g., prismatic, stacked plate electrodes, etc.) and/or non-standard voltage outputs (e.g., 3.6V) that are not widely or generally implemented in many typical consumer applications.

In contrast, the primary focus of primary lithium cell design revolves around selection of safe, cost effective materials and methods which can be implemented in commercially viable production quantities. For example, whereas most negative electrodes relying on intercalating lithium in secondary cells must be mixed with binders and coated onto foil carriers, the preferred negative electrode in a lithium-iron disulfide system is solid lithium metal or lithium alloy itself, without the need for any coating.

Primary cells must also be mass produced according to standardized size and voltage requirements (e.g., 1.5 V and AA can size). Government regulations impose further restrictions on electrochemical cell producers as to the type and maximum amount of certain inputs, such as lithium (e.g., at present, a maximum of 1 g of lithium according to certain transportation guidelines). Thus, because the shape, size and amount of electrochemically active inputs are constrained, electrochemical cell producers must carefully engineer all aspects of their cell design in order to provide improved performance. Similarly, as consumer purchased primary cells must be sized to standardized dimensions, the ability to volumetrically maximize electrochemically reactive materials within smaller standardized sizes (e.g., R6 sized or smaller, on a volumetric basis) allow for the realization of significant service improvements if the utilization of internal anodic and cathodic materials can be optimized.

Separately, certain electrochemically active materials used in the positive electrode of primary lithium systems most notably, iron disulfide undergo significant expansion during discharge of the cell (sometimes more than doubling in size), thereby presenting further difficulties in terms of how the cell is constructed. The difficulties associated with expansion may be further compounded when accounting for fact that the electrochemically active material must be mixed with binders and other additives in order to permit coating of the negative electrode material onto a conductive carrier that maintains electrical contact throughout the discharge cycle. Thus, cathode design for primary lithium cells, and especially lithium-iron disulfide systems, involves particular concerns not necessarily inherent to other systems.

Given the foregoing, it should be apparent that the teachings of secondary lithium cells do not necessarily pertain to the concerns encountered in primary lithium cell designs. Moreover, a cell design that minimizes and permits effective utilization of all electrochemically active inputs while also accommodating the nuances of a primary lithium system is needed.

WO 03/105255 discloses an electrochemical cell comprising a cylindrical container; a negative electrode comprising no more than 1.0 g of lithium; a positive electrode comprising iron disulfide coated on a conductive foil, said conductive foil having : (i) an uncoated edge on which iron disulfide is not coated on either of two interfacial surfaces for the conductive foil; (ii) first and second uncoated longitudinal sections in which the iron disulfide is not coated on at least one of the interfacial surfaces of the conductive foil; a separator, disposed between the positive electrode and the negative electrode; wherein the separator, positive electrode and negative electrode are spirally wound into a jellyroll configuration; wherein the jellyroll configuration and a non-aqueous organic electrolyte are disposed within the container.

### SUMMARY OF THE INVENTION

In view of the above problems and considerations, the need still exists for a primary electrochemical cell design that provides improved cell performance and optimizes active materials utilized in the cell.

Accordingly, one object of the invention to provide an electrochemical cell that exhibits desirable cell performance characteristics, such as increased cell capacity, without exceeding mandated limits on the amounts of various materials, such as lithium, within a cell..

Another object of the invention is to provide an electrochemical cell having improved lithium utilization efficiency, unexpectedly improved capacity and improved interfacial contact between the negative electrode and positive electrode through the use of a selectively deposited configuration of electrochemically active material on the positive electrode.

A further object of the present invention is to provide an electrochemical cell relying upon a jellyroll configuration wherein material, costs are lowered by decreasing the amount of lithium utilized, when compared to conventional cell design wherein the lithium extends around the outermost circumference of the jellyroll configuration.

Accordingly, the present invention relates to
an electrochemical cell (110) comprising:
a cylindrical container (112);
a negative electrode (120) comprising no more than 1.0 g of lithium;
a positive electrode (118) comprising iron disulfide coated on a conductive foil, said conductive foil having: (i) an uncoated edge on which iron disulfide is not coated on either of two interfacial surfaces of the conductive foil, (ii) first and second uncoated longitudinal sections in which the iron disulfide is not coated on at least one of the interfacial surfaces of the conductive foil;
a separator, disposed between the positive electrode (118) and the negative electrode (120);
wherein the separator, positive electrode (118) and negative electrode (120) are spirally wound into a jellyroll configuration (119);
wherein no iron disulfide is provided around the outermost wind of the jellyroll configuration (119);
wherein the jellyroll configuration (119), and a non-aqueous organic electrolyte are disposed within the container (112);
wherein at least one of the uncoated longitudinal sections extends across a width of the conductive foil from "the uncoated edge to an opposing edge thereof; and
wherein one of the following applies:
   a) the second uncoated longitudinal section is disposed on an opposite interfacial surface relative to the first uncoated longitudinal section and the first and second uncoated longitudinal sections are positioned so that the first uncoated longitudinal section does not overlap with the second uncoated longitudinal section; or
   b) the second uncoated longitudinal section is disposed on a common interfacial surface relative to the first uncoated longitudinal section with a coated section interposed therebetween; or
   c) the second uncoated longitudinal section is disposed on an opposite interfacial surface relative to the first uncoated longitudinal section and further comprising a third uncoated section disposed on a common interfacial surface with the first uncoated longitudinal section but with a coated section interposed therebetween.

Preferred embodiments of the invention are apparent from the dependent claims.

Accordingly, one aspect of the present disclosure is a primary electrochemical cell comprising a non-intercalating negative lithium electrode and an iron disulfide positive electrode, wound into a jellymll configuration with a separator disposed between the two electrodes. The jellyroll is disposed in a cylindrical housing along with a non-aqueous organic electrolyte. Notably, the iron disulfide is coated onto a substrate, but in a manner that leaves a partially uncoated portion on one side of the carrier that extends from one axial edge of the substrate toward its opposing axial edge. This uncoated portion follows a longitudinal axis along the height of the jellyroll/cell container, when the jellyroll is created. A second partially uncoated portion may be provided, preferably on the opposite side of the substrate, so as to form a second longitudinal axis. These longitudinal axes may overlap (i.e., be directly proximate to one another but on opposite sides of the substrate) or be offset from one another. The uncoated portion can then be aligned on the outer circumference and/or the innermost core of the jellyroll, eliminating the need to place lithium adjacent to the uncoated portion(s), reducing the amount of lithium required and generally allowing for a cost savings in the construction of the cell. At the same time and notwithstanding the reduced lithium input, cells according to this design exhibited increased performance in comparison to cells having the additional lithium.

Another aspect of the present disclosure is an electrochemical cell, having a nominal voltage of 1.5V, made with a negative electrode of lithium and a positive electrode with electrochemically active material coated on a foil carrier. Here again, the electrodes are spirally wound with a separator into a jellyroll and disposed in a cylindrical container along with a non-aqueous electrolyte. In this case, the conductive carrier has a lengthwise section running from one end of the foil to another without coating on either side that is preferably oriented at the top end of the jellyroll. As above, at least one uncoated portion extends across the width of the foil carrier. When the jellyroll is wound, it is preferable to orient the uncoated portion on the outermost circumference of the jellyroll. If multiple uncoated portions are provided, the first and second uncoated portions may partially or completely overlap (i.e., be proximate to one another but on opposing sides of the foil carrier). However, if a third uncoated portion is provided on the same surface of the foil as the first, it must be separated from the first uncoated portion by a coated portion (i.e., except for the uncoated lengthwise section, the first and third sections must have a coated portion interposed therebetween). This aspect of the invention again permits decreased lithium input while exhibiting superior performance in comparison to conventional cells.

A further aspect of the present disclosure is a cylindrical electrochemical cell comprising a negative electrode containing no more than 1 g of lithium and a positive electrode with iron disulfide coated on a conductive foil so that at least one uncoated longitudinal portion extends from an uncoated edge of the foil across the width of the foil to the opposite edge. The electrodes are spirally wound with a separator and a non-aqueous organic electrolyte is used. The resulting cell with have a discharge capacity of at least 2400 mAh when placed on a 2000mA continuous drain test taken to a 1.0 V cutoff. As with the other aspects of the invention, reduced lithium and enhanced service characterize this cell.

Unless otherwise specified, as used herein the terms listed below are defined as follows:
electrochemically active material - one or more chemical compounds that are part of the discharge reaction of a cell and contribute to the cell discharge capacity, including impurities and small amounts of other moieties present;
electrochemically active material mixture - a mixture of solid electrode materials, excluding current collectors and electrode leads, that contains the electrode active material;
average particle size - the mean diameter of the volume distribution of a sample of a composition (MV);
capacity, discharge - the actual capacity delivered by a cell during discharge, generally expressed in amp-hour (Ah) or milliamp-hours (mAh);
capacity, input - the theoretical capacity of an electrode, equal to the weight of each active material in the electrode times the theoretical specific capacity of that active material, where the theoretical specific capacity of each active material is determined according to the following calculation: [(96,487 ampere-seconds/mole)/(number of grams/mole of active material)] x (number of electrons/mole of active material)/(3600 seconds/hour) x (1000 milliampere hours/ampere-hour); Using this equation, the following theoretical input capacities can be calculated: Li = 3862.0 mAh/g, S = 1672.0 mAh/g, FeS₂ = 893.6 mAh/g, CoS₂ = 871.3 mAh/g, CFₓ = 864.3 mAh/g, CuO = 673.8 mAh/g, C₂F = 623.0 mAh/g, FeS = 609.8 mAh/g, CuS = 560.7 mAh/g, Bi₂O₃ = 345.1 mAh/g, MnO₂ = 308.3 mAh/g, Pb₂Bi₂O₅ = 293.8 mAh/g and FeCuS₂ = 292.1 mAh/g);
capacity, electrode interfacial - the total contribution of an electrode to the cell theoretical discharge capacity, based on the overall cell discharge reaction mechanism(s) and the total amount of active material contained within the that portion of the active material mixture adjacent to active material in the opposite electrode, assuming complete reaction of all of the active material, generally expressed in Ah or mAh (where only one of the two major surfaces of an electrode strip is adjacent active material in the opposite electrode, only the active material on that side of the electrode either the material on that side of a solid current collector sheet or that material in half the thickness of an electrode without a solid current collector sheet - is included in the determination of interfacial capacity);
electrode loading - total material mixture dry weight per unit of electrode surface area, generally expressed in grams per square centimeter (g/cm²);
electrode packing total material dry weight per unit of electrode surface area divided by the theoretical active material mixture dry weight per unit of electrode surface area, based on the real densities of the solid materials in the mixture, generally expressed as a percentage;
interfacial height, electrode assembly - the average height, parallel to the longitudinal axis of the cell, of the interfacial surface of the electrodes in the assembly;
interfacial volume, electrode assembly - the volume within the cell housing defined by the cross-sectional area, perpendicular to the longitudinal axis of the cell, at the inner surface of the container side wall(s) and the electrode assembly interfacial height;
nominal - a value, specified by the manufacturer, that is representative of what can be expected for that characteristic or property;
room temperature - between 20°C and 25°C;
spirally wound electrodes - electrode strips that are combined into an assembly by winding along their lengths or widths, e.g., around a mandrel or central core; and

### BRIEF DESCRIPTION OF THE DRAWINGS

The invention will be better understood and other features and advantages will become apparent by reading the detailed description of the invention, taken together with the drawings, wherein:
Figure 1 is a general view in cross section of a lithium-iron disulfide electrochemical cell according to any embodiment of the invention.
Figures 2a and 2b respectively show a cross sectional side view and a top view of the selectively coated positive cathode according to a first embodiment of the invention, while Figure 2c shows a cross sectional top view of the jellyroll assembly created according to this embodiment.
Figures 3a, 3b and 3c respectively show a cross sectional side view, a top view and a bottom plan view of the selectively coated positive cathode according to a second embodiment of the invention, while Figure 3d shows a cross sectional top view of the jellyroll assembly created according to this embodiment.
Figures 4a, 4b and 4c respectively show a cross sectional side view, a top view and a bottom plan view of the selectively coated positive cathode according to a third embodiment of the invention, while Figure 4d shows a cross sectional top view of the jellyroll assembly created according to this embodiment
Figures 5a, 5b and 5c respectively show a cross sectional side view, a top view and a bottom plan view of the selectively coated positive cathode- according to a fourth embodiment of the invention, while Figure 5d shows a cross sectional top view of the jellyroll assembly created according to this embodiment.
Figures 6a and 6b show general top and/or bottom views of an alternative selectively coated positive cathode that could be implemented in any of the aforementioned embodiments of the invention.

### DETAILED DESCRIPTION OF THE INVENTION

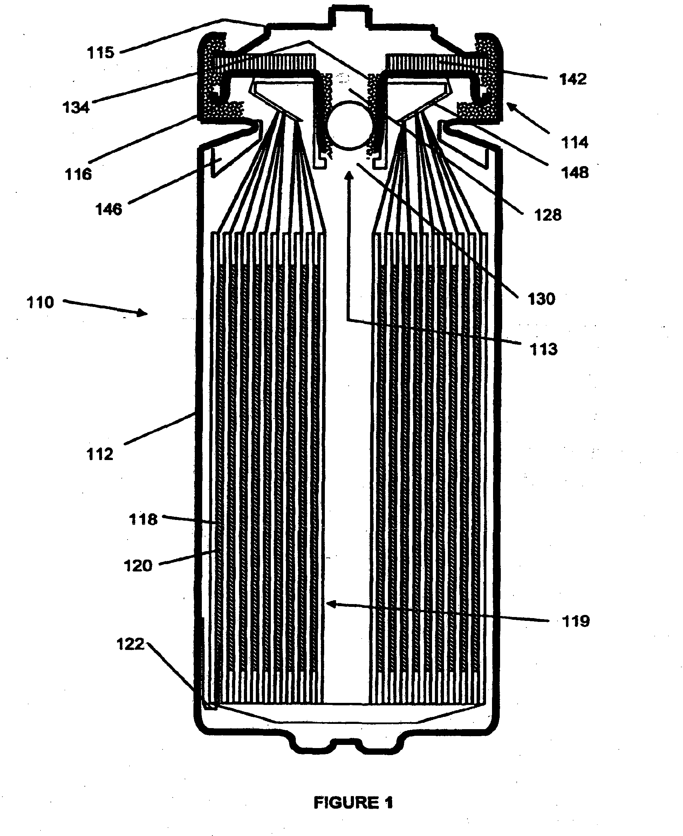

Figure 1 illustrates the cell design for a typical lithium-iron disulfide electrochemical cell as may be used in conjunction with the invention. Notably, other designs or configurations are possible, so long as such other designs or configurations rely upon the jellyroll electrode assembly and, more specifically, the selectively patterned as described below.

The electrochemical cells of the invention are normally cylindrical in shape and preferably have a maximum height greater than the maximum diameter, with the cylindrical container having a greater interior volumetric capacity than the cover or end cap. Preferably, the dimensions of the cells will match standardized sizes (e.g., IEC, etc.), including but not limited to "AA", "AAA" and "AAAA" sizes. However, the invention can also be adapted to other cell sizes and shapes and to cells incorporating an oval or circular jellyroll electrode assembly, housing, seal and pressure relief vent designs, etc.

A preferred embodiment of the invention will be better understood with reference to FIG. 1, which shows a primary electrochemical cell 110. Cell 110 is an AA size lithium iron disulfide cylindrical electrochemical cell (also referred to as an FR6 under EEC nomenclature) wherein the electrodes 118, 120 are provided in a jellyroll configuration. Cell 110 has a housing that includes a container 112, preferably having a closed bottom and an open top end to simplify assembly and closing/sealing of the cell. U.S. Patent Application Publication No. 2006/0046154, which generally describes some of the features of a cylindrical lithium iron diswfide electrochemical cell common to the current invention (including but not limited to exemplary construction and materials for the container and exemplary active components of the cell).

Cell closure 114 is affixed over the open end of the container 112 according to any number of known mechanisms. In a preferred embodiment, cell closure 114 comprises pressure relief vent 113, upper terminal cover 115, gasket 116 and PTC 142. Upper terminal cover 115 may be held in place by the inwardly crimped top edge of container 112 and gasket 116. In a preferred embodiment, container 112 may have a bead or reduced diameter step near the top end which axially and/or radially compresses the container 112 and the cell closure 114, thereby forming an essentially leak-proof seal. Notably, cell closure 114 (and in a more specific and preferred embodiment, gasket 116) must provide electrical insulation between the container 112 and the terminal cover 115 in order to avoid unwanted shorting of the cell 110. Cell closure 114 and container 110 work in conjunction with one another to provide a leak-proof seal for the cell internals, including electrodes 118, 120 and the non-aqueous electrolyte (not shown in Fig. 1).

Cell container 112 is preferably a metal can with an integral closed bottom, although in some embodiments a metal tube that is initially open at both ends can be used instead of a can. The container 112 can be any suitable material with non-limiting examples including stainless steels, nickel plated stainless steels, nickel clad or nickel plated steels, aluminum and alloys thereof. For example, a diffusion annealed, low carbon, aluminum killed, SAE 2006 or equivalent steel with a grain size of ASTM 9 to 11 and equiaxed to slightly elongated grain shape is preferred in one embodiment of the invention. Choice of container material depends upon factors including, but not limited to, conductivity, corrosion resistance, compatibility with internal and active materials within the cell and cost.

Cell closure 114, and including terminal cover 115, must also be made from a conductive material, such as a metal, metal alloy or an appropriate conductive plastic. Suitable examples include, but are not limited to, those used in the construction of the container (discussed above) or other known materials possessing the other qualities discussed herein. In addition to the considerations identified in the preceding paragraph, the complexity of the cover shape, ease of forming/machining/casting/extruding and compatibility with cell internals are all factors for consideration. The cell cover 114 and/or upper terminal cover 115 may have a simple shape, such as a thick, flat disc, or may have a more complex shape, such as the cover shown in FIG. 1, and may be designed to have an attractive appearance when visible on consumer batteries. To the extent that terminal cover 115 or cell cover 114 is located over a pressure relief vent 113, the respective covers generally have one or more holes to facilitate cell venting.

Gasket 116 is a non-conductive portion of the cell cover and is compressed between can 112 and cover 114 to seal the peripheral edges of these components, to prevent corrosion and to inhibit leakage of electrolyte through, around or between these components. Gasket 116 can be made of a polymeric composition, for example, a thermoplastic or thermoset polymer, the composition of which is based in part on the chemical compatibility the electrodes 118, 120 and the electrolyte used in cell 110. Examples of materials that can be used in a gasket 116 include but are not limited to, polypropylene, polyphenylene sulfide, tetrafluoride-perfluoroalkyl vinyl ether co-polymer, polybutylene terephthalate (PBT), ethylene tetrafluoroethylene, polyphthalamide, and any suitable combination or blend of the aforementioned materials. A preferred polypropylene that can be used is PRO-FAX ® 6524 from Basell Polyolephins, of Wilmington, Delaware, USA. A preferred polyphenylene sulfide is available as TECHTTRON® PPS from Boedeker Plastics, Inc. of Shiner, Texas, USA. A preferred polyphthalamide is available as Amodel® ET 1001 L from Solvay Advanced Polymers of Alpharetta, Georgia. The polymers can also contain reinforcing inorganic fillers and organic compounds in addition to the base resin, such as glass fibers and the like. One significant factor in selecting a material will depend upon the low vapor transmission rate of the electrolyte for the cell, with polyphthalamides generally providing superior performance in this regard.

The gasket 116 may be coated with a sealant to provide an even better seal. Ethylene propylene diene terpolymer (EPDM) is a suitable sealant material, but other suitable materials can be used.

A positive temperature coefficient (PTC) device 142 may also be disposed between the peripheral flange of terminal cover 115 and cell cover 114. PTC 142 substantially limits the flow of current under abusive electrical conditions. During normal operation of the cell 110, current flows through the PTC device 142. If the temperature of the cell 110 reaches an abnormally high level, the electrical resistance of the PTC device 142 increases to reduces the current flow, thereby allowing PTC device 142 to slow or prevent cell continued internal heating and pressure buildup resulting from electrical abuses such as external short circuiting, abnormal charging and forced deep discharging. Nevertheless, if internal pressure continues to build to the predetermined release pressure, the pressure relief vent 113 may be activated to relieve the internal pressure. Thus, the cell described herein effectively has redundant safety mechanisms, although neither such mechanism is essential to the invention described and claimed herein.

Cell closure 114 includes a pressure relief vent 113 as a safety mechanism to avoid internal pressure build up and to prevent disassembly of the cell under abusive conditions. In one embodiment, cell cover 114 includes a ball vent comprising an aperture with an inward projecting central vent well 128 with a vent hole 130 in the bottom of the well 128. The aperture is sealed by a vent ball 132 and a thin-walled thermoplastic bushing 134, which is compressed between the vertical wall of the vent well 128 and the periphery of the vent ball 132. When the cell internal pressure exceeds a predetermined level, the vent ball 132, or both the ball 132 and bushing 134, is/are forced out of the aperture to release pressurized gasses from cell 110.

The vent busing 134 is made from a thermoplastic material that is resistant to cold flow at high temperatures (e.g., 75°C). The thermoplastic material comprises a base resin such as ethylene-tetrafluoroethylene, polybutylene terephthlate, polyphenylene sulfide, polyphthal-amide, ethylenechloro-trifluoroethylene, chlorotrifluoroethylene, perfluoroalkoxyalkane, fluorinated perfluoroethylene polypropylene and polyetherether ketone. Ethylene-tetrafluoroethylene copolymer (ETFE), polyphenylene sulfide (PPS), polybutylene terephthalate (PBT) and polyphthalamide are preferred. The resin can be modified by adding a thermal-stabilizing filler to provide a vent bushing with the desired sealing and venting characteristics at high temperatures. The bushing can be injection molded from the thermoplastic material. TEFZEL® HT2004 (ETFE resin with 25 weight percent chopped glass filler) is a preferred thermoplastic material.

The vent ball 132 can be made from any suitable material that is stable in contact with the cell contents and provides the desired cell sealing and venting characteristic. Glasses or metals, such as stainless steel, can be used.

In an alternative embodiment, vent 113 may comprise a single layer or laminar foil vent. Such foil vents prevent vapor transmission and must be chemically compatible with the electrodes 118, 120 and the electrolyte. Optionally, such foil vents may also include an adhesive component activated by pressure, ultrasonic energy and/or heat in order to further perfect the seal. In a preferred embodiment, a four layered vent consisting of oriented polypropylene, polyethylene, aluminum and low density polyethylene may be used, although other materials are possible, as well as varying the number of layers in the laminate. The vent may be crimped, heat sealed and/or otherwise mechanically held in place over an aperture in the cell closure 114. Notably, use of such a vent increases the internal volume of the cell 110 available for electrochemically active materials. In particular and understanding that appropriate materials should be utilized and electrical connections must be maintained, a foil vent similar to that disclosed in U.S. Patent Application Publication No. 2005/0244706 may be used.

The cell 110 includes positive electrode 118 and negative electrode 120 that are spirally-wound together in a jellyroll configuration, with a separator disposed between positive electrode 118 and negative electrode 120. In order to maximize internal cell volume, a circular electrode assembly is preferred.

Negative electrode 120 comprises a foil or sheet of pure lithium or an alloy of lithium selected to enhance the conductivity, ductility, processing capabilities or mechanical strength of the negative electrode 120. In a preferred embodiment, the lithium may be alloyed with 0.1% to 2.0% aluminum by weight, with most preferred alloy having about 0.5% aluminum by weight. Such a material is available from Chemetall Foote Corp., Kings Mountain, NC, USA.

Depending upon the polarity of the cell, an electrically conductive member or anode tab 122 is fixedly connected to the negative electrode 120 along at least one portion of the electrode 120 to conduct current to the negative terminal of cell 110. Owing to the properties of lithium, this connection can be accomplished by way of a simple pressure contact which embeds one end of anode tab 122 within a portion of the negative electrode or by pressing an end of the member onto a surface of the lithium foil. In a preferred embodiment, the anode tab 122 is connected to the negative electrode along the outermost circumference of jellyroll electrode assembly 119, although the member may be connected at other and/or multiple locations on electrode 120.

Anode tab 122 serves as an electrical lead or tab to electrically connect the negative electrode 120 to the cell container 112. In an alternative embodiment, it is possible to create a "reversed polarity cell" wherein a electrically conductive member (not shown) makes electrical contact between negative electrode 120 and a portion of cell closure 114 thereby imparting a negative polarity to closure 114 and more specifically terminal cover 115. Such an electrically conductive member would be made from a material, preferably a metal or metal alloy selected for its ductility, mechanical strength, conductivity and compatibility with the electrocherizically active materials inside cell 110, including the electrolyte. One of the preferred materials is nickel plated cold rolled steel, although steel, nickel, copper and other similar materials may be possible.

A current collector (not shown) may also be included as part of negative electrode 118, e.g., to maintain electrical continuity within the negative electrode during discharge, as the lithium is consumed. When the negative electrode includes a current collector, it may be made of copper because of its conductivity, but other conductive metals can be used as long as they are stable inside the cell. The collector itself may be integrally formed or separately attached to the lithium or lithium alloy. Such a collector is separate from, but may be used in conjunction with or in place of, the anode tab described above.

Positive electrode 118 comprises an electrochemically active material affixed on both sides of an electrically conductive foil in a selectively coated or "patterned" configuration. The foil may be aluminum or other suitable materials, allowing for appropriate rheological properties to adhere the electrochemically active material. The electrochemically active material is preferably iron disulfide. The precise properties of each will be described in greater detail below.

Positive electrode 118 is spirally wound with the negative electrode 120 with a separator (not shown, but located along all interfacial contact points between electrodes 118, 120) to form jellyroll electrode assembly 119. The positive electrode 118 forms the outer-most wind of the jellyroll configuration 119. Prior to winding, electrodes 118, 120 have a width substantially corresponding to an axis traced along the longitudinal length of container 112. The upper ends of positive electrode 118 and negative electrode 120 are preferably coextensive, with current collectors associated with each and positioned to make appropriate electrical contact with the terminals associated with the bottom or side of the container 112 and the cell closure 114. Alternatively, one of the electrodes 118 or 120 may have an edge, oriented along the top of the jellyroll electrode assembly 119, substantially equal to the upper axial end height of the separator utilized so that it does not extend thereabove, and the other electrode is deliberately sized larger to advantageously allow for enhanced electrical connection with the cell closure 114 and/or the bottom of container 112. While several embodiments below contemplate a jellyroll electrode assembly wherein the negative electrode extends partially along the outer-most circumference to allow affixing the anode tab at the outer-most circumference to avoid risk of puncturing the separator and shorting the cell, it should be understood that the positive electrode can overlap the end of the negative electrode in the jellyroll (i.e., truly form the entire outer-most layer of the jellyroll) and additional separator or insulation may be provided to address the risk of shorting.

As the positive electrode forms the vast majority of the outermost circumference of jellyroll assembly 119, the container 112 may serve as the positive terminal of the electrochemical cell 110 (with collector assembly 114 configured in conjunction with negative electrode 120 to serve as the negative terminal). Alternatively, an insulating material, such as the separator or other suitable insulating tape, may be disposed around the outer-most wind to prevent shorting of the cell 110. In this alternative, the electrochemically active material is not coated along the top axial edge of the foil carrier of positive electrode 118, thereby reducing the amount of lithium input (as compared to instances where lithium forms the outer-most wind) and generally allowing for better utilization of the electrochemically active materials in the cell (as compared to instances where iron disulfide is coated on the outer-most wind but not consumed for lack of adjacent lithium). This uncoated portion extends upward into the cell closure 114, and maybe partially collared by insulating cone 146, where it makes electrical contact with contact spring 148. Thus, the foil carrier preferably serves as a current collector for positive electrode, although a separate current collector may otherwise be provided; welded or integrally imbedded into the positive electrode surface, with similar design considerations/parameters as those described for the negative electrode collector above.

The positive electrode 118 for cell 110 may contain one or more active materials, usually in particulate form. Iron disulfide (FeS₂) is the dominant (i.e., at least 50% by weight) if not exclusive electrochemically active material so as to realize the full benefits of the patterning described below, although other active materials may be used, for example Bi₂O₃, C₂F, CFₓ, (CF)ₙ, CoS₂. CuO, CuS, FeS, FeCuS₂, MnO₂, Pb₂Bi₂O₅ and S. Regardless, the choice of cathode material will have direct impact on the optimal electrolyte, both in terms of chemical compatibility and overall cell performance, such that the closure 114 must be specifically engineered to the materials selected.

The electrochemically active material in the positive electrode 118 is coated onto a foil carrier, such as aluminum, that is preferably less than about 500 µm (20 mils) in thickness and more preferably between 150-380 µm (6-15 mils) in thickness, inclusive of the thickness of the foil and the coating. The electrochemically active materials are usually in particulate form, with iron disulfide being the preferred active material. In a Li/FeS₂ cell, the active material comprises at least greater than 50 weight percent FeS₂. More preferably, the active material for a Li/FeS₂ cell positive electrode generally comprises at least 95 weight percent FeS₂, desirably at least 99 weight percent FeS₂, and preferably FeS₂ is the sole active positive electrode material. Battery grade FeS₂ having a purity level of at least 95 weight percent is available from American Minerals, Inc., Camden, NJ, USA; Chemetall GmbH, Vienna, Austria; Washington Mills, North Grafton, MA; and Kyanite Mining Corp., Dillwyn, VA, USA.

The pyrite or iron disulfide (FeS2) particles utilized in electrochemical cell cathodes are typically derived from natural ore which is crushed, heat treated, and milled. The fineness of the grind is limited by the reactivity of the particles with air and moisture. Large iron disulfide particles sizes can impact processes such as calendering, causing substrate distortion, coating to substrate bond disruption, as well as failures from separator damage. However, as the particle size is reduced, the surface area thereof is increased and is weathered. Weathering is an oxidation process in which the iron disulfide reacts with moisture and air to form iron sulfates. The weathering process results in an increase in acidity and a reduction in electrochemical activity. Ultimately, the preferred particle size for pyrite particles is between 1 and 30 µm, and more preferably between 1.5 and 15 µm and most preferably between 2-6 µm.

The average particle size of the FeS₂ is preferably predetermined and created by a wet milling method such as a media mill, or a dry milling method using a non-mechanical milling device such as a jet mill. Electrochemical cells prepared with the reduced average particle size FeS₂ particles exhibit increased cell voltage at any given depth of discharge, irrespective of cell size. The smaller FeS₂ particles also make possible thinner coatings of positive electrode material on the current collector; for example, coatings of less than 10 µm can still be used. Preferred FeS₂ materials and methods for preparing the same are disclosed in United States Patent Publication Nos. 2005-0233214A1) and 2005-277023A1.

In addition to the active material, the positive electrode mixture contains other materials. A binder is generally used to hold the particulate materials together and adhere the mixture to the current collector. One or more conductive materials such as metal, graphite and carbon black powders may be added to provide improved electrical conductivity to the mixture. The amount of conductive material used can be dependent upon factors such as the electrical conductivity of the active material and binder, the thickness of the mixture on the current collector and the current collector design. Small amounts of various additives may also be used to enhance positive electrode manufacturing and cell performance. The following are examples of active material mixture materials for Li/FeS₂ cell positive electrodes. Graphite: KS-6 and TIIVIREX® MX15 grades synthetic graphite from Timcal America, Wesdake, OH, USA. Carbon black: Grade C55 acetylene black from Chevron Phillips Company LP, Houston, TX, USA or Grade SN2AYS acetylene black from Soltex of Houston, TX, USA. Binder: ethylene/propylene copolymer (PEPP) made by Polymont Plastics Corp. (formerly Polysar, Inc.) and available from Harwick Standard Distribution Corp., Akron, OH, USA; non-ionic water soluble polyethylene oxide (PEO): POLYOX® from Dow Chemical Company, Midland, MI, USA; and G1651 grade styrene-ethylenelbutylenes-styrene (SEBS) block copolymer from Kraton Polymers, Houston, TX. Additives: FLUO HT ® micronized polytetrafluoroethylene (PTFE) manufactured by Micro Powders Inc., Tarrytown, NY, USA (commercially available from Dar-Tech Inc., Cleveland, OH, USA) and AEROSIL® 200 grade fumed silica from Degussa Corporation Pigment Group, Ridgefield, NJ.

A preferred method of making FeS₂ positive electrodes is to roll coat a slurry of active material mixture materials in a highly volatile organic solvent (e.g., trichloroethylene) onto both sides of a sheet of aluminum foil, dry the coating to remove the solvent, calender the coated foil to compact the coating, slit the coated foil to the desired width and cut strips of the slit positive electrode material to the desired length. It is desirable to use positive electrode materials with small particle sizes to minimize the risk of puncturing the separator. For example, FeS₂ is preferably sieved through a 230 mesh (63 µm) screen before use. Coating thicknesses of 100 µm and less are common.

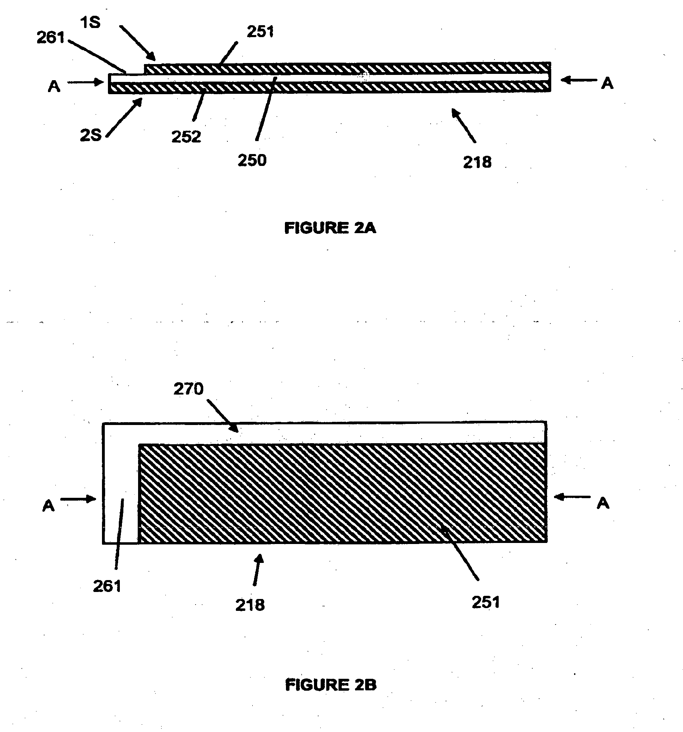

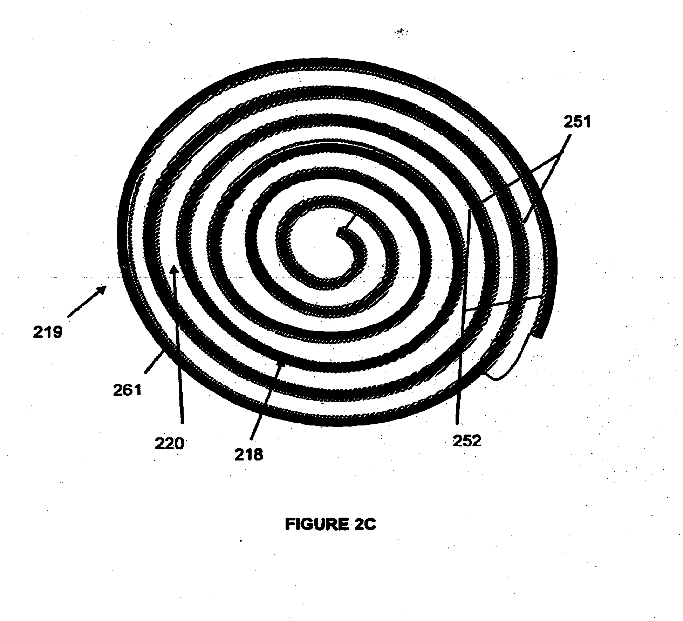

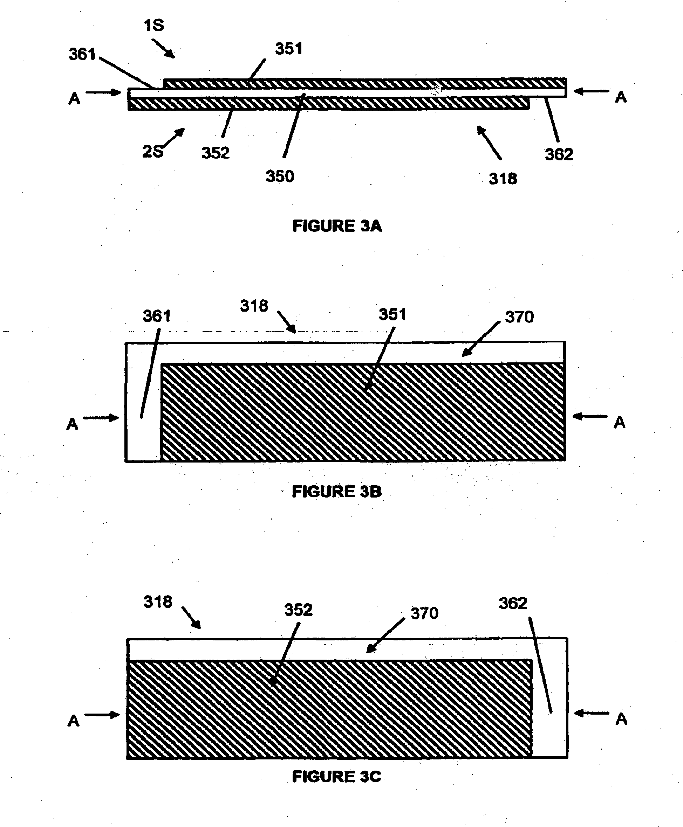

Figures 2a through 5d, inclusive, depict the coating patterns that help to characterize the preferred embodiments of the invention. In each instance, the FeS₂ and associated binding materials (all discussed above) are only selectively deposited on portions of one or both sides of the aluminum foil. For example, Figures 2a and 2b show a positive electrode, prior to spiral winding within the jellyroll configuration, while Figures 3a-3c, 4a-4c and 5a-5c show a separate embodiments of an unwound positive electrode. The line defined by A-A is common to each set of figures (e.g., Figures 2a-2b, Figures 3a-3c, etc.), while line A-A also defines the radial axis along which the cross sectional views of Figures 2c, 3d, 4d and 5d are depicted.

With reference to Figure 2a, positive electrode 218 comprises two interfacial sides 1S and 2S. of a foil carrier 250. In Figure 2a, foil carrier 250 is shown in cross section with respect to its thickness. Electrochemically active material is deposited on coated region 251 of interfacial side 1S, such that an uncoated region 261 is exposed along interfacial side 1S. Notably, interfacial side 2S has electrochemically active material coated along its entire length in the direction of line A-A, as shown by coated region 252.

Figure 2b illustrates a top view of interfacial side 1S. Here, it can be clearly seen that uncoated region 261 extends along the width, or more preferably the longitudinal axis of the jellyroll when the foil carrier 250 is spirally wound or most preferably (and as shown in the figures) the longitudinal edge, of the foil carrier 250. Optionally, in lieu of a current collector and as is known in the prior art, axially uncoated edge 270 may be provided on both interfacial sides 1S and 2S to establish electrical connectivity to the container or the cell closure assembly when electrode 218 is spirally wound with a separator and a negative electrode.

Figure 2c shows a radial cross section of the resulting jellyroll electrode 219 along line A-A when positive electrode 218 is spirally wound as described above with negative electrode 220 and a separator (not shown but disposed along all interfacial contact points between positive electrode 218 and negative electrode 220). Notably, uncoated region 261 is disposed along the outermost circumference of jellyroll electrode assembly 219, resulting in the benefits and improvements described throughout herein. Negative electrode 220 may be wound to extend partially along the outermost circumference (shown in the figure) so that an anode tab (not shown in Figure 2c but described above) may be affixed without increasing the risk of puncturing the separator, and thereby shorting the cell, at the interfacial area between the electrodes 218, 220.

Another embodiment is illustrated in Figures 3a, 3b and 3c. Here, two uncoated regions are provided on opposing interfacial sides of the carrier foil. More specifically, starting with reference to Figure 3a, positive electrode 318 comprises two interfacial sides 1S and 2S of a foil carrier 350. In Figure 3a, foil carrier 350 is also shown in cross section with respect to its thickness. Electrochemically active material is deposited on coated region 351 of interfacial side 1S, such that an uncoated region 361 is exposed along interfacial side 1S. Similarly, interfacial side 2S has electrochemically active material deposited on coated region 352 so as to leave an uncoated region 362.

Figure 3b then illustrates a top view of interfacial side 1S and corresponding Figure 3c shows a top view of interfacial side 2S. As above, the uncoated region 361 extends along the width, or more preferably the longitudinal axis of the jellyroll when the foil carrier 350 is spirally wound or most preferably (and as shown in the figures) the longitudinal edge of the foil carrier 350 in Figure 3b, while uncoated region 362 extends along an opposed width or longitudinal edge of interfacial side 2S in Figure 3c. Axially uncoated edge 370 may again be optionally provided in lieu of a current collector to establish electrical connectivity to the container or the cell closure assembly when electrode 318 is spirally wound with a separator and a negative electrode.

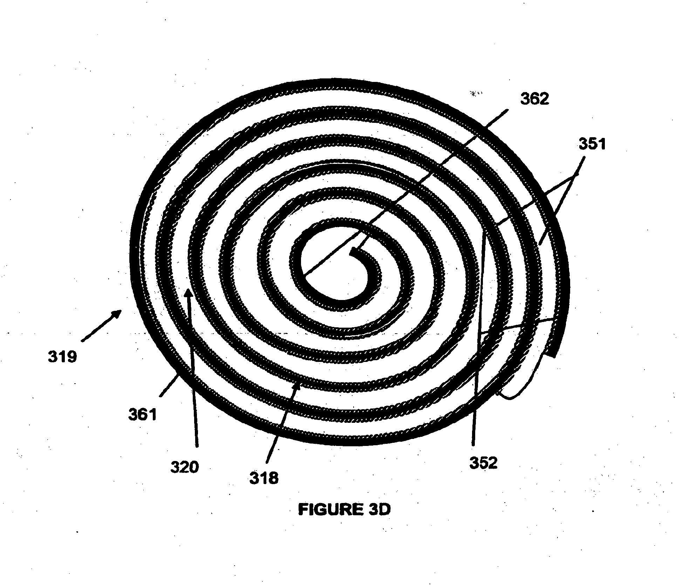

Figure 3d shows the radial cross section of the resulting jellyroll electrode 319 along line A-A when positive electrode 318 is spirally wound as described above with negative electrode 320 and a separator (not shown but disposed along all interfacial contact points between positive electrode 318 and negative electrode 320). Notably, uncoated region 361 is disposed along the outermost circumference of jellyroll electrode assembly 319, while uncoated region 362 is positioned on the innermost core of the jellyroll 319. The negative electrode 320 again preferably extends partially along the outermost circumference to provide a longitudinal axis along the jellyroll 319 where the anode tab (not shown) may be safely and securely placed. As above, the resulting cell has improved service with reduced lithium inputs, all described in greater detail below.

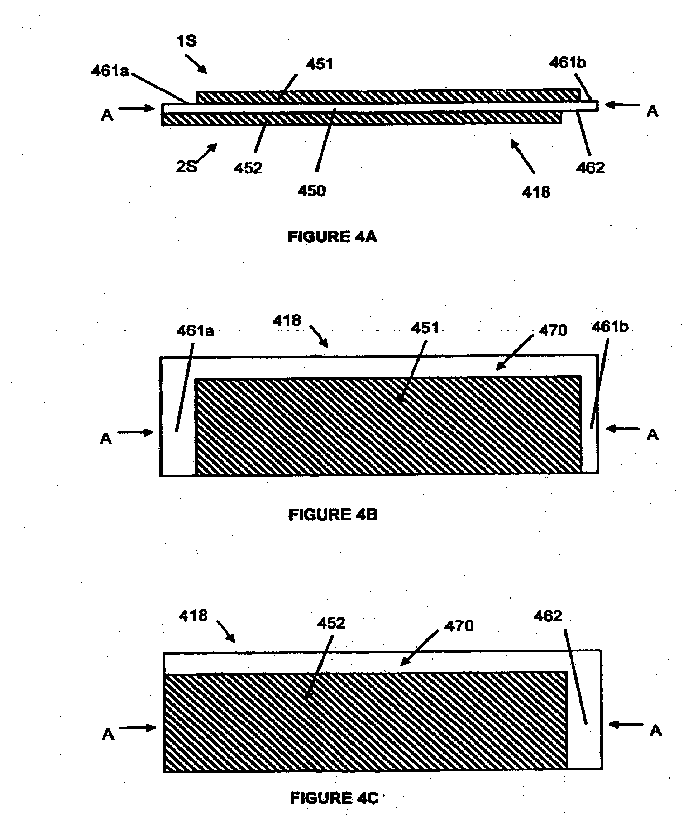

A third embodiment is illustrated in Figures 4a, 4b and 4c. Here, two uncoated regions are provided on a single interfacial side of the carrier foil, with a third uncoated region formed on the opposing side. More specifically, starting with reference to Figure 4a, positive electrode 418 comprises two interfacial sides 1S and 2S of a foil carrier 450. In Figure 4a, foil carrier 450 is shown in cross section with respect to its thickness. Electrochemically active material is deposited on coated region 451 of interfacial side 1S, such that an uncoated regions 461a, 461b are exposed along interfacial side 1S, preferably with regions 461a and 461b being located on opposite longitudinal edges of foil carrier 450. Interfacial side 2S has electrochemically active material deposited on coated region 452 so as to leave an uncoated region 462, preferably directly beneath region 461b. Region 461b and at least part of region 462 can be incorporated into a mandrel to simplify or expedite the spiral winding process.

Figure 4b illustrates a top view of interfacial side 1S and corresponding Figure 4c shows a top view of interfacial side 2S. As in Figure 4b, the uncoated region 461a extends along a first width, or more preferably the longitudinal axis of the jellyroll when the foil carrier 450 is spirally wound and most preferably (and as shown in the figures) the longitudinal edge of the foil carrier 450 and 461b extends along an opposing width/axis/edge thereof, while uncoated region 462 extends along an opposed longitudinal width/axis/edge of interfacial side 2S in Figure 4c, either directly proximate to one of the uncoated regions 461a, 461b or offset therefrom. Axially uncoated edge 470 may again be optionally provided in lieu of a current collector to establish electrical connectivity to the container or the cell closure assembly when electrode 418 is spirally wound with a separator and a negative electrode.

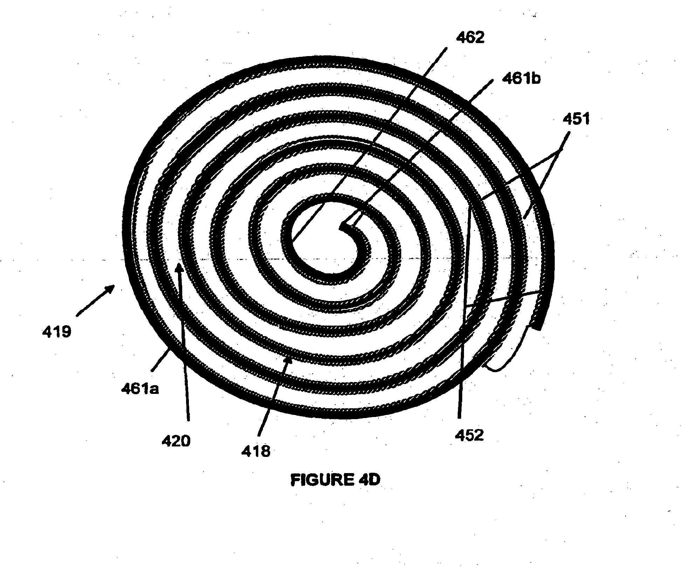

Figure 4d shows the radial cross section of the resulting jellyroll electrode 419 along line A-A when positive electrode 418 is spirally wound as described above with negative electrode 420 and a separator (not shown but disposed along all interfacial contact points between positive electrode 418 and negative electrode 420). Notably, uncoated region 461 is disposed along the outermost circumference of jellyroll electrode assembly 419, while uncoated region 462 is positioned on the innermost core of the jellyroll 419. Region 461b is also located on the innermost leading edge of jellyroll 419, for the reasons stated above. The negative electrode 420 again preferably extends partially along the outermost circumference to provide a longitudinal axis along the jellyroll 419 where the anode tab (not shown) may be safely and securely placed. As above, the resulting cell has improved service with reduced lithium inputs, all described in greater detail below.

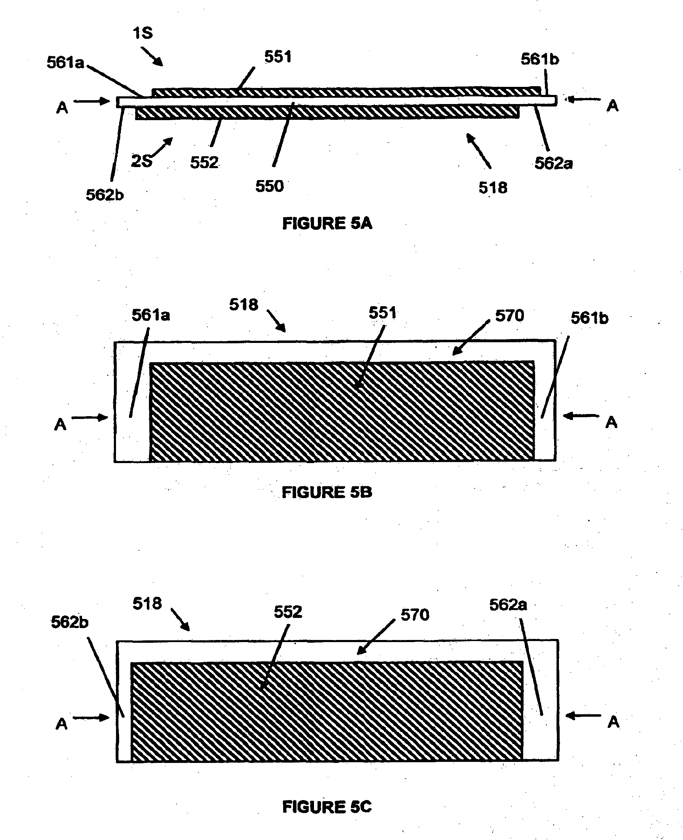

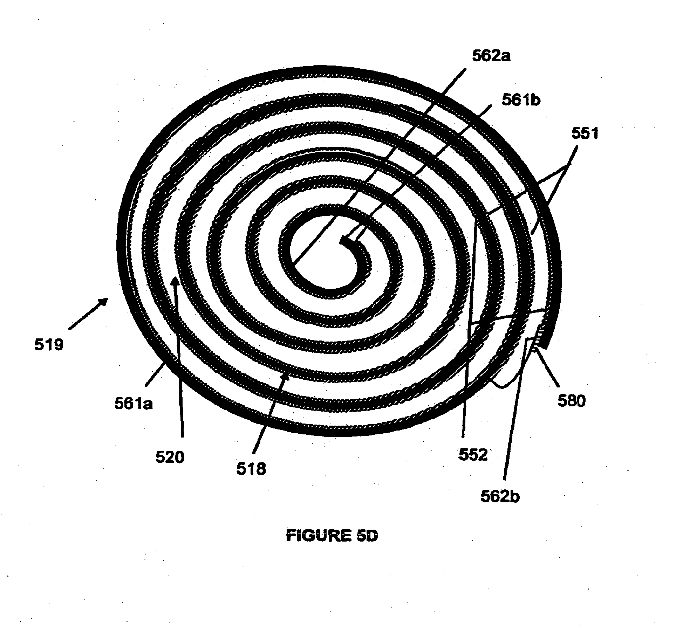

A fourth embodiment is illustrated in Figures 5a, 5b and 5c. Here, two uncoated regions are provided on each interfacial side of the carrier foil. More specifically, starting with reference to Figure 5a, positive electrode 518 comprises two interfacial sides 1S and 2S of a foil carrier 550. In Figure 5a, foil carrier 550 is shown in cross section with respect to its thickness. Electrochemically active material is deposited on coated region 551 of interfacial side 1S, such that an uncoated regions 561a, 561b are exposed along interfacial side 1S, preferably with regions 561a and 561b being located on opposite longitudinal edges of foil carrier 550. Interfacial side 2S has electrochemically active material deposited on coated region 552 so as to leave uncoated regions 562a, 562b, preferably with 562a aligned under 562b and region 562b directly proximate to region 561a. These uncoated regions allow for simplified manufacturing processes, in terms of feeding uncoated portions into the mandrel of the spiral winding operation and in terms of cutting and sizing the electrode 518 to less exacting tolerances, although slightly more separator may be needed as compared to the embodiments so as to prevent shorting at the uncoated regions. Specifically, region 580 of Figure 5d denotes where such excess separator or insulating material may be needed. It should be understood that such excess material(s) could also be used in any of the embodiments of the invention to allow for simplified manufacturing of large continuous rolls of electrodes according to more relaxed tolerances than would be possible. Such excess separator/imsulation regions are also necessary to the extent that any of the uncoated regions are located on the interior width of the positive electrode (i.e., any instance where the jellyroll electrode configuration would mean an uncoated region is located anywhere other than the outer-most circumference or the inner-most core of the jellyroll).

Figure 5b illustrates a top view of interfacial side 1S and corresponding Figure 5c shows a top view of interfacial side 2S. As in Figure 5b, the uncoated regions 561a extends along a first longitudinal edge of the foil carrier 550 and 561b extends along an opposing edge thereof, while uncoated region 562a, 562b extend along opposed longitudinal edges of interfacial side 2S in Figure 5c. Axially or lengthwise uncoated edge 570 may again be optionally provided in lieu of a current collector to establish electrical connectivity to the container or the cell closure assembly when electrode 518 is spirally wound with a separator and a negative electrode.

Figure 5d shows the radial cross section of the resulting jellyroll electrode 519 along line A-A when positive electrode 518 is spirally wound as described above with negative electrode 520 and a separator (not shown but disposed along all interfacial contact points between positive electrode 518 and negative electrode 520). Notably, uncoated region 561a is disposed along the outermost circumference of jellyroll electrode assembly 519, while uncoated region 562a is positioned on the innermost core of the jellyroll 519. Region 561b is also located on the innermost leading edge of jellyroll 519, and region 562b is near the outer-most wind, although not located on the outer circumference thereof. The negative electrode 520 again preferably extends partially along the outermost circumference to provide a longitudinal axis along the jellyroll 519 where the anode tab (not shown) may be safely and securely placed. As above, the resulting cell has improved service with reduced lithium inputs, all described in greater detail below.

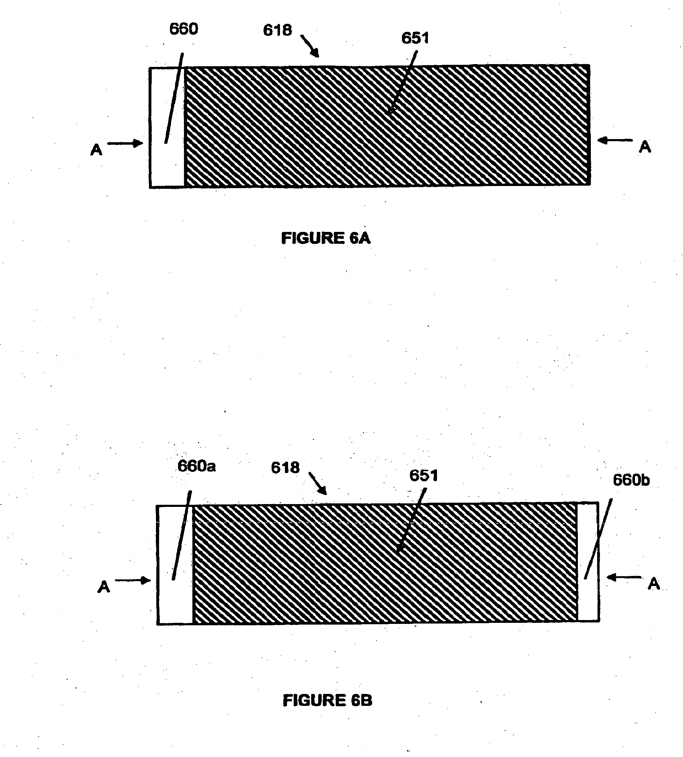

Figures 6a and 6b show an alternative coating pattern that could be implemented in any one of the embodiments described herein. With reference to Figure 6a, a top or bottom view of positive electrode 618 is shown. Here, the mass free zone has been eliminated along the lengthwise edge of the positive electrode 618 so that the only uncoated region is located along the width of the electrode as shown by uncoated section 660. As above, positive electrode mix, which includes electrochemically active material (i.e., iron disulfide), any optional binder(s), conductive material(s) and processing aid(s), is coated in region 651. Notably, this pattern may be created on one or both interfacial sides (e.g., 1S and/or 2S of the positive electrode in any of Figures 2a, 3a, 4a or 5a), and in the event both interfacial sides are coated, they may be proximate to or offset from one another. Similarly, in Figure 6b, two uncoated regions 660a, 660b are patterned on electrode 618, along with positive electrode mix 651. As in Figure 6a, this pattern may be placed on one or both sides of the positive electrode 618, with the respective uncoated regions 660a, 660b on each side being proximate to one another or offset. In both Figures 6a and 6b, the preferred arrangement is to have the uncoated regions disposed at opposed width-wise edges of the electrode, with a coated region interposed therebetween.

Generally speaking, all of the aforementioned configurations eliminate the need to provide any electrochemically active material around the outermost wind of the jellyroll electrode. This feature is even more significant, as the most prevalent design of prior art cells not only required electrochemically active material, but provided it in the form of negative electrode lithium which is expensive and difficult to handle. Thus, the lithium inputs for a cell of the present invention are reduced, while numerous, unexpected improvements are observed in terms of performance, as discussed in greater detail below.

Moreover, it should be noted that the uncoated regions described above do not need to extend along the entire longitudinal length of the jellyroll. However, the fullest benefits of the invention are realized according to the embodiments described above.

To the extent that uncoated regions are directly proximate one another on opposite sides of the width-wise edge of the foil, this uncoated portion may allow for a simplified jellyroll winding procedure. Here, the uncoated regions are oriented within the winding mandrel, separator and negative electrode material are provided in a layered fashion and the jellyroll electrode assembly is then wound. Because the uncoated foil is primarily oriented within the winding mandrel, this winding procedure will result in the uncoated regions forming a non-collapsing core for the jellyroll, as seen in figure 4d.

Such a non-collapsing core eliminates the need to utilize more expensive separator or negative electrode materials in the start of the winding process, thereby resulting in a cost savings to the manufacturer. At the same time, the uncoated width-wise edge provided in the winding mandrel should not comprise so much fully uncoated material (i.e., uncoated regions located proximate one another on opposite sides of the substrate) so as to collapse in upon itself or to otherwise compact upon release from the mandrel so as to form a solid axial core along the longitudinal axis of the jellyroll. Or stated differently, the resulting jellyroll electrode assembly should not be wound so tightly and with so much uncoated width-wise. Preferably, this means that the uncoated portion should not extend for more than one full winding revolution of the mandrel.

Turning the remaining features of the cell 110, an insulating cone 146 (shown in FIG. 1) may be used collar the positive electrode and/or any current collector used in conjunction therewith in order to further reduce the likelihood of shorting of the cell. The annular insulating cone 146 is preferably disposed between the bead of the can and the top of the jellyroll electrode assembly 119. Preferably, only the uncoated portions 270 (in Figure 2b) or as appropriate in any of the other figures of the foil carrier of the positive electrode will need to be collared by insulating cone 146. In any event, care should be taken to avoid having the insulating cone 146 unnecessarily compress the top ends of the jellyroll electrode assembly 119, as such compression may lead to unwanted shorting of the cell 110. It may also be possible to orient the uncoated portions 270 (in Figure 2b) or as appropriate in any of the other figures so as to contact the bottom of cell housing, thereby obviating the need for an insulating cone 146.

Electrolytes for lithium cells, and particularly for lithium iron disulfide cells, are non-aqueous electrolytes containing water only in very small quantities as a contaminant (e.g., no more than about 500 parts per million by weight, depending on the electrolyte salt being used). Any nonaqueous electrolyte suitable for use with lithium and active positive electrode material may be used. The electrolyte contains one or more electrolyte salts dissolved in an organic solvent. Suitable salts depend on the anode and cathode active materials and the desired cell performance, but examples include lithium bromide, lithium perchlorate, lithium hexafluorophosphate, potassium hexafluorophosphate, lithium hexafluoroarsonate, lithium trifluoromethanesulfonate and lithium iodide. Suitable organic solvents include one or more of the following: dimethyl carbonate; diethyl carbonate; dipropyl carbonate; methylethyl carbonate; ethylene carbonate; propylene carbonate; 1,2-butylene carbonate; 2,3-butylene carbonate; methaformate; gamma-butyrolactone; sulfolane; acetonitrile; 3,5-dimethylisoxazole; n,n-dimethylformamide; and ethers. The salt and solvent combination should provide sufficient electrolytic and electrical conductivity to meet the cell discharge requirements over the desired temperature range. When ethers are used in the solvent they provide generally low viscosity, good wetting capability, good low temperature discharge performance and high rate discharge performance. Suitable ethers include, but are not limited to, acyclic ethers such as 1,2-dimethoxyethane (DME); 1,2-diethoxyethane; di(methoxyethyl)ether; triglyme, tetraglyme and diethylether; cyclic ethers such as 1,3-dioxolane (DIOX), tetrahydrofuran, 2-methyl tetrahydrofuran and 3-methyl-2-oxazolidinone; and mixtures thereof. Usage of additional cosolvents, either listed above or known to those in the art, is also possible.

With respect to the Li/FeS₂ in particular, examples of suitable salts include lithium bromide, lithium perchlorate, lithium hexafluorophosphate, potassium hexafluorophosphate, lithium hexafluoroarsenate, lithium trifluoromethanesulfonate and lithium iodide; and suitable organic solvents include one or more of the following: dimethyl carbonate, diethyl carbonate, methylethyl carbonate, ethylene carbonate, propylene carbonate, 1,2-butylene carbonate, 2,3-butylene carbonate, methyl formate, γ-butyrolactone, sulfolane, acetonitrile, 3,5-dimethylisoxazole, n,n-dimethyl formamide and ethers. The salt/solvent combination must provide sufficient electrolytic and electrical conductivity to meet the cell discharge requirements over the desired temperature range. Ethers are often desirable because of their generally low viscosity, good wetting capability, good low temperature discharge performance and good high rate discharge performance. This is particularly true in Li/FeS₂ cells because the ethers are more stable than with MnO₂ positive electrodes, so higher ether levels can be used. Suitable ethers include, but are not limited to acyclic ethers such as 1,2-dimethoxyethane, 1,2-diethoxyethane, di(methoxyethyl) ether, triglyme, tetraglyme and diethyl ether; and cyclic ethers such as 1,3-dioxolane, tetrahydrofuran, 2-methyl tetrahydrofuran and 3-methyl-2-oxazolidinone.

The molar concentration of the electrolyte salt can be varied to modify the conductive properties of the electrolyte. Examples of suitable nonaqueous electrolytes containing one or more electrolyte salts dissolved in an organic solvent include, but are not limited to, a 1 mole per liter solvent concentration of lithium trifluoromethanesulfonate (14.60% by weight) in a solvent blend of 1,3-dioxolane, 1,2-diethoxyethane, and 3,5-dimethyl isoxazole (24.80:60.40:0.20% by weight) which has a conductivity of 2.5 mS/cm; a 1.5 moles per liter solvent concentration of lithium trifluoro-methanesulfonate (20.40% by weight) in a solvent blend of 1,3-dioxolane, 1,2-diethoxy-ethane, and 3,5-dimethylisoxazole (23.10:56.30:0.20% by weight) which has a conductivity of 3.46 mS/cm; and a 0.75 mole per liter solvent concentration of lithium iodide (9.10% by weight) in a solvent blend of 1,3-dioxolane, 1,2-diethoxyethane, and 3,5-dimethylisoxazole (63.10:27.60:0.20% by weight) which has a conductivity of 7.02 mS/cm. Electrolytes utilized in the electrochemical cells of the present invention should have conductivity generally greater than about 2.0 mS/cm, desirably greater than about 2.5 or about 3.0 mS/cm, and preferably greater than about 4, about 6, or about 7 mS/cm.

Suitable separator materials are ion-permeable and electrically non-conductive. Examples of suitable separators include microporous membranes made from materials such as polypropylene, polyethylene and ultra high molecular weight polyethylene. A suitable separator material for Li/FeS₂ cells is available as CELGARD® 2400 microporous polypropylene membrane from Celgard Inc., of Charlotte, North Carolina, USA; Setella F20DHI microporous polyethylene membrane available from Exxon Mobil Chemical Company of Macedonia, New York, USA; and Teklon Gold LP microporous polyethylene membrane from Entek International LLC of Lebanon, Oregon, USA.

The separator is a thin microporous membrane that is ion-permeable and electrically nonconductive. It is capable of holding at least some electrolyte within the pores of the separator. The separator is disposed between adjacent surfaces of the anode and cathode to electrically insulate the electrodes from each other. Portions of the separator may also insulate other components in electrical contact with the cell terminal to prevent internal short circuits. Edges of the separator often extend beyond the edges of at least one electrode to insure that the anode and cathode do not make electrical contact even if they are not perfectly aligned with each other. However, it is desirable to minimize the amount of separator extending beyond the electrodes.

Additionally, to the extent the cell is designed to be container-negative, a layer of separator will be disposed between the jellyroll configuration and the sidewall of the housing/container so as to provide appropriate electrical insulation, while an anode collector tab attached to the lithium electrode and extending outside of the jellyroll (either on the longitudinal sides or at the bottom) insures sufficient negative electrical connection with the container. Additional separator or insulating material may be needed, as mentioned above, to insure no shorting occurs along any patterned (i.e., uncoated) length of positive electrode.

To provide good high power discharge performance it is desirable that the separator have the characteristics similar to those disclosed in U.S. Pat No. 5,290,414. Suitable separator materials should also be strong enough to withstand cell manufacturing processes as well as pressure that may be exerted on the separator during cell discharge without tears, splits, holes or other gaps developing that could result in an internal short circuit. Additional suitable separator materials are described in U.S. Patent Application Publication No. 2005-0112462A1 and its progeny.

To minimize the total separator volume in the cell, the separator should be as thin as possible, but at least 1 µm or more so a physical barrier is present between the cathode and anode to prevent internal short circuits. That said, the separator thickness ranges from 1 to 50 µm, desirably from 5 to 25 µm, and preferably from 10 to 16 or 20 µm. The required thickness will depend in part on the strength of the separator material and the magnitude and location of forces that may be exerted on the separator where it provides electrical insulation.

Separator membranes for use in lithium batteries are often made of polypropylene, polyethylene or ultrahigh molecular weight polyethylene, with polyethylene being preferred. The separator can be a single layer of biaxially oriented microporous membrane, or two or more layers can be laminated together to provide the desired tensile strengths in orthogonal directions. A single layer is preferred to minimize the cost. Suitable single layer biaxially oriented polyethylene microporous separators are identified above, each having preferred thickness between 16-20 µm.

The cell can be closed and sealed using any suitable process. Such processes may include, but are not limited to, crimping, redrawing, colleting and combinations thereof. For example, for the cell in FIG. 1, a bead is formed in the can after the electrodes and insulator cone are inserted, and the gasket and cover assembly (including the cell cover, contact spring and vent bushing) are placed in the open end of the can. The cell is supported at the bead while the gasket and cover assembly are pushed downward against the bead. The diameter of the top of the can above the bead is reduced with a segmented collet to hold the gasket and cover assembly in place in the cell. After electrolyte is dispensed into the cell through the apertures in the vent bushing and cover, a vent ball is inserted into the bushing to seal the aperture in the cell cover. A PTC device and a terminal cover are placed onto the cell over the cell cover, and the top edge of the can is bent inward with a crimping die to retain the gasket, cover assembly, PTC device and terminal cover and complete the sealing of the open end of the can by the gasket.

### Example I

A first set of cells were constructed using standard "AA" sized cans and the most preferred materials identified above. In particular, the negative electrode having a thickness of 150 µm (about 6 mils), width of 39 mm and a length of 305.1 mm was provided. The positive electrode had the most preferred FeS₂ mix deposited to a thickness of about 80 µm (3 mils) on either side of an aluminum foil. The final positive electrode had a width of 46.7 mm, including a 3.0 mm width uncoated axial edge, and a length of 328.7 mm, including an uncoated region having a length of 31.0 mm at the terminal longitudinal edge of only one interfacial side of the positive electrode (the second interfacial side being coated along its entire length, but again with the 3.0 mm uncoated axial edge). The two electrodes were spirally wound with a 404.2 length of the preferred separator and sealed along with the preferred electrolyte in a standard AA sized container according to the procedures described above.

A second set of cells were constructed using standard "AAA" sized cans and the most preferred materials identified above. In particular, the negative electrode having a thickness of 150 µm (about 6 mils), width of 34.2 mm and a length of 149.2 mm was provided. The positive electrode had the most preferred FeS₂ mix deposited to a thickness of about 80 µm (3 mils) on either side of an aluminum foil. The final positive electrode had a width of 42.9 mm, including a 3.0 mm width uncoated axial edge, and a length of 167.1 mm, including an uncoated region having a length of 20.8 mm at the terminal longitudinal edge of only one interfacial side of the positive electrode (the second interfacial side being coated along its entire length, but again with the 3.0 mm uncoated axial edge). The two electrodes were spirally wound with a 243.4 mm length of the most preferred separator and sealed along with the preferred electrolyte in a standard AAA sized container according to the procedures described above.

### Example II

A set of AA sized (FR6) cells were constructed, again according to the principles described above and using the most preferred materials, along with a control. In this instance, the amount of alloyed lithium present in the control cell was 1.000 g, whereas the alloyed lithium in the experimental cells was varied as shown in Table 1b below. The lithium in the experimental cells was reduced by reducing the negative electrode length and reducing the positive electrode length accordingly to ensure the positive electrode did not overlap the negative electrode tab.

By providing an electrochemical cell with an electrode assembly as specified above, the quantity of lithium, can be reduced as compared to previously known cell designs, while at the same time increasing lithium utilization and unexpectedly increasing cell capacity. Notably, even if a fully coated, double-sided positive electrode were provided on the outermost circumference in place of lithium, the unreacted FeS₂ would still occupy internal volume, which is at a premium for smaller standard cell sizes, and would probably increase the potential for electrical shorting, as both the particulate nature of pyrite and its extraordinary propensity to expand upon discharge makes any such design more prone to shorting by way of puncture of the insulating material (e.g., separator) between the jellyroll and the negative container. In this regard, it should also be noted that the inventors believe United States Serial No. 11/493,314 published as US 2008-0026288), from which the present application claims priority, represents the first instance in which a lithium-iron disulfide cell is described with a positive-container polarity. Tables 1a and 1b below shows the potential reduction in lithium inputs possible according to the invention. Table 2 highlights the dimensional differences in the electrodes for control cells created for comparative purposes to both Examples I and II. Note that the control cells, as referred to throughout this specification, were constructed from the same materials and according to the same procedures as those of Examples I and II. It should understood that with respect to dimensional differences shown in Tables 1a and 2, these differences are directly attributable to the fact that in the control cells lithium must be provided along the outermost circumference (as is known in the art and noted above).

**Table 1a. Comparison of Control Cells to Experimental Cells for Example I.**

| **Control Cells** | | | **Example I** | | |
|---|---|---|---|---|---|
| Cell Size | Li (g) | Interfacial Surface Area | Li (g) | Interfacial Surface Area | Δ Li (g) |
| AA | 1.000 | 197.6 cm² | 0.965 | 233.3 cm² | -3.5% |
| AAA | 0.45 | 87.3 cm² | 0.41 | 91.0 cm² | -8.8% |

**Table 1b. Comparison of Control Cells to Experimental Cells for Example II.**

| | **Cathode Length (cm)** | | **Anode** | |
|---|---|---|---|---|
| Lot Name | Total | Uncoated | (cm) | Li(g) |
| Control | 29.85 | | 31.62 | 1.000 |
| II-a | 32.87 | 3.1 | 30.51 | 0.965 |
| II-b | 32.37 | 3.2 | 30.01 | 0.949 |
| II-c | 31.67 | 3.0 | 29.51 | 0.933 |
| II-d | 31.17 | 3.0 | 29.01 | 0.917 |

**Table 2. Dimensional Comparison Between Control Cells and Experimental Cells.**

| **Feature** | **Control AA size** | **Control AAA size** |
|---|---|---|
| Positive electrode length | 298.5 mm | 146.1 mm |
| Negative electrode length | 316.1 mm | 163.8 mm |
| Separator length | 396.2 mm | 233.7 mm |

| | | |
|---|---|---|
| ***** NOTE ALL OTHER DIMENSIONS/MATERIALS ARE IDENTICAL***** | | |

At least 5 cells each from Example I and from the control cells were then tested for service life under various conditions as shown in Tables 3a and 3b below. Similarly, Table 4 illustrates the service improvements achieved as a function of lithium reduction in the cell. As used throughout, "Cont." stands for a continuous drain test at the specified power or current. "1.5/0.65W DSC" contemplates a test in which the cell is exposed to a 1.5W pulse for 2 s followed by a 0.65 W pulse for 28 s, which is repeated 10 times per hour. "1.2/0.65W DSC" contemplates a test in which the cell is exposed to a 1.2W pulse for 2 s followed by a 0.65 W pulse for 28 s, which is repeated 10 times per hour. All tests, as shown in Tables 3a, 3b and 4, were conducted at room temperature.

**Table 3a. Comparison of Performance Data, AA Size.**

| **Test** | **Cutoff (V)** | **Control Cell Time** | **Example I Time** | **Δ** |
|---|---|---|---|---|
| 200mA Cont. | 0.9 | 898.7 min | 946.1 min | + 5.3% |
| 1000mA Cont. | 1.0 | 158.2 min | 161.8 min | + 2.3% |
| 1500mW Cont | 1.0 | 114.8 min | 123.8 min | + 7.9% |
| 1.5/0.65W DSC | 1.05 | 275.0 min | 295.0 min | + 7.3% |

**Table 3b. Comparison of Performance Data, AAA Size.**

| **Test** | **Cutoff V** | **Control Cell Time** | **Example I Time** | **Δ** |
|---|---|---|---|---|
| 200mA Cont. | 0.9 | 750.2 min | 798.2 min | + 6.4% |
| 600mA Cont. | 1.0 | 107.7 min | 115.1 min | + 6.9% |
| 1000mA Cont. | 1.0 | 55.0 min | 58.6 min | + 6.6% |
| 1500mW Cont. | 1.0 | 65.2 min | 69.0 min | + 5.8% |
| 1.2/0.65W DSC | 1.05 | 88.0 min | 95.2 min | + 8.2% |

**Table 4. Effect of Li Reduction on Service, AA Size.**

| **Test** | **Cutoff (V)** | **Control** | **II-a** | **II-b** | **II-c** | **II-d** |
|---|---|---|---|---|---|---|
| 200mA Cont. | 0.9 | 931.6 min | 971.6 min | 956.0 min | 932.1 min | 907.7 min |
| | | 3106 mAh | 3239 mAh | 3187 mAh | 3107 mAh | 3026 mAh |
| | | | Δ + 4.3% | Δ + 2.6% | Δ + 0.1% | Δ - 2.6% |
| | | | | | | |
| 1000mA Cont. | 1.0 | 173.4 min | 181.2 min | 180.0 min | 175.6 min | 171.0 min |
| | | 2890 mAh | 3015 mAh | 3000 mAh | 2926 mAh | 2850 mAh |
| | | | Δ + 4.5% | Δ + 3.8% | Δ + 1.3% | Δ - 1.4% |
| | | | | | | |
| 1500mA Cont. | 1.0 | 106.6 min | 110.7 min | 110.8 min | 105.0 min | 103.2 min |
| | | 2664 mAh | 2767 mAh | 2770 mAh | 2625 mAh | 2580 mAh |
| | | | Δ + 3.9% | Δ + 4.0% | Δ - 1.5% | Δ - 3.1% |
| | | | | | | |
| 2000mA Cont. | 1.0 | 69.2 min | 73.3 min | 74.0 min | 69.7 min | 67.0 min |
| | | 2305 mAh | 2444 mAh | 2468 mAh | 2325 mAh | 2234 mAh |
| | | | Δ + 6.0% | Δ + 7.1% | Δ + 0.8% | Δ - 3.1% |
| | | | | | | |
| 1000mW Cont. | 1.0 | 230.6 min | 239.2 min | 237.6 min | 229.6 min | 223.8 min |
| | | 2956 mAh | 3059 mAh | 3034 mAh | 2939 mAh | 2871 mAh |
| | | | Δ + 3.7% | Δ + 3.0% | Δ - 0.4% | Δ - 2.9% |
| | | | | | | |
| 1500mW Cont. | 1.0 | 134.7 min | 141.9 min | 142.6 min | 134.8 min | 131.6 min |
| | | 2694 mAh | 2826 mAh | 2832 mAh | 2697 mAh | 2630 mAh |
| | | | Δ + 5.3% | Δ + 5.9% | Δ + 0.1% | Δ - 2.3% |
| | | | | | | |
| 2000mW Cont. | 1.0 | 85.2 min | 92.0 min | 91.6 min | 83.6 min | 83.2 min |
| | | 2335 mAh | 2496 mAh | 2492 mAh | 2283 mAh | 2274 mAh |
| | | | Δ + 8.0% | Δ + 7.5% | Δ - 1.9% | Δ - 23% |
| | | | | | | |
| 1.5/0.65W DSC | 1.05 | 333.6 min | 347.8 min | 341.6 min | 334.6 min | 330.8 min |
| | | 2909 mAh | 3034 mAh | 2977 mAh | 2930 mAh | 2890 mAh |
| | | | Δ + 4.3% | Δ + 2.4% | Δ + 03% | Δ - 06% |

Clearly, cells of the present invention, irrespective of size, demonstrate improved performance despite the fact they contain almost 7% less lithium than the corresponding control cell. This result was unexpected and seemingly counter-intuitive, as the generally accepted teaching in the art is that more and NOT less electrochemically active materials in the cell should result in improved service. Also, the improved service is observed across all tests, irrespective of low or high drain and irrespective of power requirements.

One proposed theory for these observed benefits may be because the lithium on the outer wrap of the spirally wound electrode of the prior art (where lithium is provided on the outermost circumference) is only consumed or discharged from one side, thereby leaving unreacted lithium, whereas the current design is more efficient in that substantially all of the lithium may be reacted (except in the case where the lithium extends to the outermost circumference of the jellyroll in order to permit affixation of the anode tab along this outermost circumference).

## Claims

1. An electrochemical cell (110) comprising:
a cylindrical container (112);
a negative electrode (120) comprising no more than 1.0 g of lithium;
a positive electrode (118) comprising iron disulfide coated on a conductive foil, said conductive foil having: (i) an uncoated edge on which iron disulfide is not coated on either of two interfacial surfaces of the conductive foil, (ii) first and second uncoated longitudinal sections in which the iron disulfide is not coated on at least one of the interfacial surfaces of the conductive foil;
a separator, disposed between the positive electrode (118) and the negative electrode (120);
wherein the separator, positive electrode (118) and negative electrode (120) are spirally wound into a jellyroll configuration (119);
wherein the jellyroll configuration (119) and a non-aqueous organic electrolyte are disposes within the container (112);
wherein at least one of the uncoated longitudinal sections extends across a width of the conductive foil from the uncoated edge to an opposing edge thereof; and
wherein one of the following applies:
(a) the second uncoated longitudinal section is disposed on an opposite interfacial surface relative to the first uncoated longitudinal section and the first and second uncoated longitudinal sections are positioned so that the first uncoated longitudinal section does not overlap with the second uncoated longitudinal section; or
(b) the second uncoated longitudinal section is disposed on a common interfacial surface relative to the first uncoated longitudinal section with a coated section interposed therebetween; or
(c) the second uncoated longitudinal section is disposed on an opposite interfacial surface relative to the first uncoated longitudinal section and further comprising a third uncoated section disposed on a common interfacial surface with the first uncoated longitudinal section but with a coated section interposed therebetween, and **characterized in that** no iron disulfide is provided around the outermost wind of the jellyroll configuration (119).

2. The electrochemical cell (110) of claim 1, wherein subset (b) applies and the positive electrode (118) further comprises a third uncoated section disposed on an opposite interfacial surface relative to the first and second uncoated longitudinal sections.

3. The electrochemical cell (110) of claim 1, wherein subset (c) applies and the positive electrode (118) further comprises a fourth uncoated section disposed on a common interfacial surface relative to the second uncoated section but with a second coated section interposed between the second and fourth uncoated sections.

4. The electrochemical cell (110) of claim 1, wherein subset (b) or (c) applies and the jellyroll configuration (119) further comprises a non-collapsing core.

## Patentansprüche

1. Elektrochemische Zelle (110), umfassend:
einen zylindrischen Behälter (112);
eine negative Elektrode (120), die nicht mehr als 1,0 g Lithium umfasst;
eine positive Elektrode (118), die auf eine leitfähige Folie aufgetragenes Eisendisulfid umfasst, wobei die leitfähige Folie Folgendes aufweist: (i) einen unbeschichteten Rand, auf dem kein Eisendisulfid aufgetragen ist, auf einem der beiden Grenzflächen der leitfähigen Folie, (ii) einen ersten und
einen zweiten unbeschichteten Längsschnitt, in dem das Eisendisulfid auf wenigstens eine der Grenzflächen der leitfähigen Folie nicht aufgetragen ist;
einen Separator, der sich zwischen der positiven Elektrode (118) und der negativen Elektrode (120) befindet;
wobei der Separator, die positive Elektrode (118) und die negative Elektrode (120) spiralig zu einer Rouladenkonfiguration (119) aufgewickelt sind;
wobei sich die Rouladenkonfiguration (119) und ein nichtwässriger organischer Elektrolyt innerhalb des Behälters (112) befinden;
wobei sich wenigstens einer der unbeschichteten Längsschnitte über eine Breite der leitfähigen Folie vom unbeschichteten Rand bis zu einem gegenüberliegenden Rand erstreckt; und
wobei eine der folgenden Aussagen gilt:
(a) der zweite unbeschichtete Längsschnitt befindet sich auf einer gegenüberliegenden Grenzfläche relativ zu dem ersten unbeschichteten Längsschnitt, und der erste und der zweite unbeschichtete Längsschnitt sind so positioniert, dass der erste unbeschichtete Längsschnitt nicht mit dem zweiten unbeschichteten Längsschnitt überlappt; oder
(b) der zweite unbeschichtete Längsschnitt befindet sich auf einer gemeinsamen Grenzfläche relativ zu dem ersten unbeschichteten Längsschnitt, wobei sich ein beschichteter Abschnitt dazwischen befindet; oder
(c) der zweite unbeschichtete Längsschnitt befindet sich auf einer gegenüberliegenden Grenzfläche relativ zu dem ersten unbeschichteten Längsschnitt, und weiterhin umfasst die Folie einen dritten unbeschichteten Abschnitt, der sich auf einer gemeinsamen Grenzfläche mit dem ersten unbeschichteten Längsschnitt befindet, wobei sich aber ein beschichteter Abschnitt dazwischen befindet; und
**dadurch gekennzeichnet, dass** sich kein Eisendisulfid um die äußerste Wicklung der Rouladenkonfiguration (119) herum befindet.

2. Elektrochemische Zelle (110) gemäß Anspruch 1, wobei Aussage (b) gilt und die positive Elektrode (118) weiterhin einen dritten unbeschichteten Bereich umfasst, der sich auf einer gegenüberliegenden Grenzfläche relativ zu dem ersten und dem zweiten unbeschichteten Längsschnitt befindet.

3. Elektrochemische Zelle (110) gemäß Anspruch 1, wobei Aussage (c) gilt und die positive Elektrode (118) weiterhin einen vierten unbeschichteten Bereich umfasst, der sich auf einer gemeinsamen Grenzfläche relativ zu dem zweiten unbeschichteten Längsschnitt befindet, wobei sich aber ein zweiter beschichteter Abschnitt zwischen dem zweiten und dem vierten unbeschichteten Bereich befindet.

4. Elektrochemische Zelle (110) gemäß Anspruch 1, wobei Aussage (b) oder (c) gilt und die Rouladenkonfiguration (119) weiterhin einen nichtkollabierenden Kern umfasst.

## Revendications

1. Une cellule électrochimique (110) comprenant :
un conteneur cylindrique (112) ;
une électrode positive (120) ne comprenant pas plus de 1,0 g de lithium ;
une électrode positive (118) comprenant du disulfure de fer enduit sur un support conducteur,
ledit support conducteur étant muni de : (i) un bord non enduit sur lequel du disulfure de fer n'est pas enduit ni sur l'une sur l'autre de deux surfaces d'interface du support conducteur, (ii) des première et deuxième sections longitudinales non enduites dans lesquelles le disulfure de fer n'est pas enduit sur au moins une des surfaces d'interface du support conducteur ;
un séparateur, disposé entre l'électrode positive (118) et l'électrode négative (120) ;
dans lequel le séparateur, l'électrode positive (118) et l'électrode négative (120) sont enroulés en spirale dans une configuration en « gâteau roulé » (119) ;
dans lequel la configuration en « gâteau roulé » (119) et un électrolyte organique non aqueux sont disposés dans le conteneur (112) ;
dans lequel au moins une des sections longitudinales non enduites s'étend à travers une largeur du support conducteur à partir du bord non enduit à un bord opposé de celui-ci ; et
dans lequel un de ce qui suit s'applique :
(a) la deuxième section longitudinale non enduite est disposée sur une surface d'interface opposée par rapport à la première section longitudinale non enduite et les première et deuxième sections longitudinales non enduites sont positionnées de manière à ce que la première section longitudinale non enduite ne se chevauche pas avec la deuxième section longitudinale non enduite; ou
(b) la deuxième section longitudinale non enduite est disposée sur une surface d'interface commune avec la première section longitudinale non enduite avec une section enduite interposée entre celles-ci ; ou
(c) la deuxième section longitudinale non enduite est disposée sur une surface d'interface opposée par rapport à la première section longitudinale non enduite et comprend en outre une troisième section non enduite disposée sur une surface d'interface commune avec la première section longitudinale non enduite mais avec une section enduite interposée entre celles-ci et **caractérisée en ce qu'**aucun disulfure de fer n'est prévu autour de la partie la plus extérieure de la configuration en « gâteau roulé » (119).

2. La cellule électrochimique (110) selon la revendication 1, dans laquelle le sous-ensemble (b) s'applique et l'électrode positive (118) comprend en outre une troisième section non enduite disposée sur une surface d'interface opposée par rapport aux première et deuxième sections longitudinales non enduites.

3. La cellule électrochimique (110) selon la revendication 1, dans laquelle le sous-ensemble (c) s'applique et l'électrode positive (118) comprend en outre une quatrième section non enduite disposée sur une surface d'interface commune par rapport à la deuxième section non enduite mais avec une deuxième section enduite interposée entre les deuxième et quatrième sections non enduites.

4. La cellule électrochimique (110) selon la revendication 1, dans laquelle les sous-ensembles (b) ou (c) s'appliquent et la configuration en « gâteau roulé » (119) comprend en outre un noyau de non-effondrement.
